# EUROPÄISCHE PATENTSCHRIFT

(11) **EP 1 892 503 B1**
(45) Veröffentlichungstag und Bekanntmachung des Hinweises auf die Patenterteilung: **22.06.2011**
(21) Anmeldenummer: 07113508.1
(22) Anmeldetag: 31.07.2007
(51) Int. Cl.: G01C 15/00, G12B 9/04

(54) **Schutzeinrichtung**
Safety device
Dispositif de protection

(30) Priorität: 21.08.2006 DE 202006012791 U; 20.09.2006 DE 202006014576 U
(43) Veröffentlichungstag der Anmeldung: 27.02.2008
(73) Patentinhaber: Stabila Messgeräte Gustav Ullrich GmbH, 76855 Annweiler (DE)
(72) Erfinder: Kallabis, Gabriel, 76848, Spirkelbach (DE)
(74) Vertreter: Stoffregen, Hans-Herbert

(56) Entgegenhaltungen:
- EP-A- 0 219 191
- WO-A-98/32472
- DE-U1- 8 812 269
- US-A1- 2006 013 278
- US-B1- 6 938 350

## Beschreibung

Die Erfindung bezieht sich auf ein Messgerätegehäuse wie Lasergerätegehäuse mit einer dieses abschnitts-weise umgebenden Schutzeinrichtung.

Ein Schutzgehäuse für einen Lasernivellierer ist aus dem DE-U-200 21 781 bekannt. Das Lasergerät wird vollständig von dem Schutzgehäuse aufgenommen und besteht aus Kunststoff. Zur Nutzung des Lasergerätes muss das Schutzgehäuse geöffnet und das Lasergerät auf eine Außenfläche des Schutzgehäuses gestellt werden.

Um ein Lasergerät zu schützen, wird dessen Gerätegehäuse von einem als Aufnahme bezeichneten Schutzgehäuse nach der EP-B-1 376 055 umgeben. Das Schutzgehäuse weist U-förmige Bügel aus Metall auf, die abschnittsweise von einem stoßabsorbierenden Kunststoff umgeben sein können.

Der US-A-6,128,326 ist ein Konstruktjonslaser mit einem Gehäuse zu entnehmen, das Griffe aufweist, die aus einem Kern aus Hartkunststoff und einer Ummantelung aus aufgeschäumtem Kunststoff bestehen.

Eine Warnblinkleuchte nach der DE-A-20 29 968 ist von zwei auseinanderklappbaren Halbschalen als Schutz umgeben. Die aus Kunststoff bestehenden Halbschalen können elastische Puffer aus Gummi oder Weichplastik zur Rutschhemmung aufweisen.

Um ein Lasergerät zu schützen, sieht die JP-A-2002 071 350 vor, dass das Gehäuse von einer aus Gummi bestehenden Kappe umgeben ist.

Die US-A-2006/0013278 bezieht sich auf ein Lasergerät, dessen Gehäuse aus Hartkunststoff besteht und einen aus weichem Material bestehenden Griff aufweist.

Von einem Gehäuse eines Lasergeräts nach der EP-A-0 219 191 geht ein gegenüber diesem abgedichteter Kopf aus Thermoplastmaterial aus, in dem ein Pentaprisma angeordnet ist.

Ein ein elektronisches Messgerät umgebendes Gehäuse nach der WO-A-98/32472 wird von einem einen Schutz bietenden Rahmen umgeben, der sich entlang des Gehäuses erstreckende Arme aufweist, die aus einem Kern aus z.B. Stahl, Aluminium, Polyamide oder PEEK und einer Ummantelung aus nachgiebigem Material bestehen.

Ein Lasergerät nach der US-B-6,938,350 weist eine Rahmenstruktur auf, die sich zwischen aus Metall bestehenden Ringelementen erstreckt. Dabei kann ein oberes Ringelement von einem Stoß absorbierenden Element aus z.B. EPDM umgeben sein.

Aus der EP-A-1 507 158 ist eine Schutzhülle für ein optisches Gerät wie Teleskop zu entnehmen. Die Schutzhülle umfasst einen thermoformbaren Kunststoff, der so geformt ist, dass er das optische Gerät zumindest teilweise umhüllt. Der thermoformbare Kunststoff ist bevorzugt zumindest teilweise mit einem elastischen Textilmaterial beschichtet. Bei der Nutzung des optischen Gerätes die Schutzhülle von diesem entfernt werden.

Die nicht vorveröffentlichte WO-A-2008/009839 bezieht sich auf eine Schutzhülle für u. a. ein Notebook und besteht aus einer dämpfenden Polymer-Schicht umgeben von einem steifen thermoplastischen Polymer-Material mit Einschnitten zur Erzielung einer Flexibilität.

Der vorliegenden Erfindung liegt die Aufgabe zu Grunde, ein Messgerätegehäuse der eingangs genannten Art so weiterzubilden, dass in hinreichendem Umfang ein Stoßschutz gegeben ist, wobei gleichzeitig sichergestellt sein soll, dass bei starken Stößen eine Beschädigung der Schutzeinrichtung selbst unterbleibt.

Zur Lösung der Aufgabe sieht die Erfindung im Wesentlichen vor dass die Schutzeinrichtung aus einem zumindest abschnittsweise das Messgerätegehäuse umgebenden Kern und einer Ummantelung besteht, wobei der Kern ein das Messgerätegehäuse gegen Stöße schützender Kern aus thermoplastischem Material ist und abschnittsweise formschlüssig von dem Messgerätegehäuse aufgenommen ist und die Ummantelung eine den Kern umgebende und den Kern gegen Abrieb und Eindringen von spitzen Gegenständen schützende Ummantelung ist, die entweder aus zumindest einem Material aus der Gruppe gummielastisches Material, Kautschuk, thermoplastisches Elastomermaterial, Ethylen-Propylen-Dien-Kautschuk (EPDM) besteht oder eine aus dem Kern durch Wärmebehandlung gebildete Haut oder auf den Kern kaschierte Folie oder auf den Kern kaschierter Stoff ist. Insbesondere umfasst die Schutzeinrichtung an Ecken und/oder Kanten des Gehäuses abstützbare und zueinander beabstandet angeordnete Elemente, die über die Ummantelung verbunden und von dieser abschnittsweise umgeben sind. Dabei kann die Ummantelung die Schutzeinrichtung auf dem Gehäuse fixieren.

Der Kern sollte aus expandiertem Polypropylen (EPP) besttehen.

Aufgrund der erfindungsgemäßen Lehre ergibt sich der Vorteil, dass ein Messgerätegehäuse mit einer Schutzeinrichtung zur Verfügung gestellt wird, die hohe Verformungen zulässt, ohne dass bleibende Schäden auftreten. So werden die sehr guten stoßabsorbierenden Eigenschaften bei sehr gutem Rückstellverhalten von EPP für den Kern genutzt, der zudem kostengünstig und einfach herstellbar ist. Das thermoplastische Material bietet allerdings ungeschützt eine geringe Abriebfestigkeit und nur einen geringen Schutz gegen Eindringen von spitzen Gegenständen wie z. B. Steinen. Durch das Ummanteln des Kerns können diese Nachteile jedoch nicht wirksam werden, da die Ummantelung der Verformung des Kerns auch bei hohen Kräften folgt.

Zwar ist es bekannt, expandiertes Polypropylen als Schlagschutz und Isolierung z. B. für Transportkisten oder als Verpackung zu verwenden. Allerdings weisen die Kisten bzw. Verpackungen keine Ummantelung auf. Vielmehr nimmt man Beschädigungen der Außenschicht in Kauf. Ferner ist es bekannt, bei PCs Platineneinschübe in Aufnahmen aus EPP einzusetzen. Solche sind sodann von einem Blechgehäuse umgeben. Im Kraftfahrzeugbereich gelangen Stoßfängersysteme zum Einsatz, die aus einem Kern aus EPP bestehen, der von härterem Kunststoff umgeben ist. Dabei wird in Kauf genommen, dass ein Reißen bei höheren Belastungen auftritt.

Der Kern der Schutzeinrichtung bzw. das Schutzgehäuse sollte aus zusammensetzbaren bzw. -steckbaren Abschnitten bestehen. Dabei umgibt der Kern abschnittsweise formschlüssig das Gerätegehäuse bzw. wird an diesem fixiert. Hierzu kann der Kern Schenkel mit zylinderförmigen Abschnitten aufweisen, die von einem Rahmen ausgehen, wobei die zylinderförmigen Abschnitte der Schenkel abschnittsweise formschlüssig von Längsschlitze aufweisenden hohlzylindrischen Schenkeln des Gerätegehäuses aufgenommen sind. In die Längsschlitze greifen sodann die Randbereiche der Schenkel ein. Bevorzugterweise weist der Rahmen eine Rechteckgeometrie auf, wobei jeweils ein Schenkel plattenförmig ausgebildet sein sollte. Zwischen den plattenförmig ausgebildeten Schenkeln erstreckt sich sodann ein als Handhabe ausgebildetes Element wie Rohr- oder Stabelement, wodurch ein weiterer Schutz des Gerätegehäuses gegeben ist.

Somit weist das Schutzgehäuse bevorzugterweise ein quaderförmiges Gerüst als den Kern mit Längs- und Querschenkeln auf, wobei die Querschenkel den jeweiligen Rahmen bilden.

Bevorzugterweise sind der Kern und die Ummantelung getrennt hergestellte Teile, wobei die Stärke des Materials der Ummantelung zwischen 0,5 mm und 5 mm liegen sollte. Bei für Lasergeräte bestimmten Schutzgehäusen sind als bevorzugte Stärken der Ummantelung 2 mm bis 3 mm und als Material EPDM anzugeben. Die Ummantelung umgibt den Kern weitgehend formschlüssig. Zum Fixieren der Ummantelung wird diese abschnittsweise zwischen dem Kern und Abschnitten des Gerätegehäuses fixiert wie festgeklemmt.

Des Weiteren sieht eine Weiterbildung der Erfindung beim Einsatz für Lasergeräte vor, dass von kopfseitigem Rahmen des Schutzgehäuses ein die Laserstrahloptik des Lasergerätes beabstandet umgebener Aufsatz ausgeht. Dabei sollte der Aufsatz aus einem mit dem kopfseitigen Rahmen z. B. durch Rast- oder Steckverbindungen verbundenen ersten Ringelement und einem mit diesem über Flachstege verbundenen zweiten Ringelement bestehen, das aus einem aus thermoplastischem Material wie EPP bestehenden Kern und einer den Kern umgebenden aus Kautschuk wie EPDM bestehenden Ummantelung besteht.

Auch besteht die Möglichkeit, dass das zweite Ringelement z. B. aus Metall oder Kunststoff wie faserverstärktem Kunststoff besteht, das von einer der erfindungsgemäßen Lehre entsprechenden Schutzreinrichtung zumindest abschnittsweise umgeben ist, also von einem aus thermoplastischem Material umgebenden Kern, der seinerseits von einer Ummantelung wie Hülle umgeben ist. Unabhängig hiervon sollten das erste Ringelement bzw. die Flachstege aus Kunststoff wie faserverstärktem Kunststoff wie glasfaserverstärktem Polyamid bestehen. Die Flachstege und das erste Ringelement sind gesonderte Elemente, wobei die Flachstege mit dem zweiten Ringelement verbunden sein können. Dies kann durch eine Rastverbindung erfolgen. Eine integrale Ausbildung von zweitem Ringelement und den Stegen ist gleichfalls möglich.

Das erste Ringelement zeichnet sich des Weiteren dadurch aus, dass es Aufnahme für den Laser bzw. die Laseroptik ist und ein Bedienerfeld aufweisen kann.

Zum Fixieren des Ringelementes stützen sich die Flachstege abschnittsweise auf dem ersten Ringelement ab, das seinerseits auf dem Gerätegehäuse aufsitzt. Fortsätze der Stege sind hülsensartig ausgebildet und weisen ein Innengewinde auf, in die Bolzen wie Stehbolzen einschraubbar sind, die von einer Bodenplatte des Gehäuses ausgehen. Die Bolzen wie Stehbolzen durchsetzen des Weiteren Durchgangsöffnungen der Schutzeinrichtung bzw. des Schutzgehäuses, insbesondere Schenkel dieses, wodurch das Schutzgehäuse selbst auf einfache Weise fixiert wird.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden bevorzugten Ausführungsbeispiels.

Es zeigen:
- Fig. 1: ein von einem Schutzgehäuse umgebenes Lasergerät,
- Fig. 2: Abschnitte eines Kerns des Schutzgehäuses gemäß Fig. 1,
- Fig. 3: die zusammengesetzten Abschnitte des Kerns gemäß Fig. 2,
- Fig. 4: einen Abschnitt eines Schutzgehäuses, das auf ein Gerätegehäuse gesteckt ist,
- Fig. 5: die Abschnitte gemäß Fig. 2, die mit dem Gerätegehäuse gemäß Fig. 4 verbunden sind,
- Fig. 6: einen Ausschnitt des Schutzgehäuses gemäß Fig. 1,
- Fig. 7: Elemente des das Lasergerät umgebenden Schutzgehäuses in Explosi- onsdarstellung,
- Fig. 8: eine weitere Ausführungsform eines ein Gerät umgebenden Schutzge- häuses,
- Fig. 9: eine dritte Ausführungsform eines ein Gehäuse umgebenden Schutzge- häuses und
- Fig. 10: das Schutzgehäuse gemäß Fig. 9 in Explosionsdarstellung.

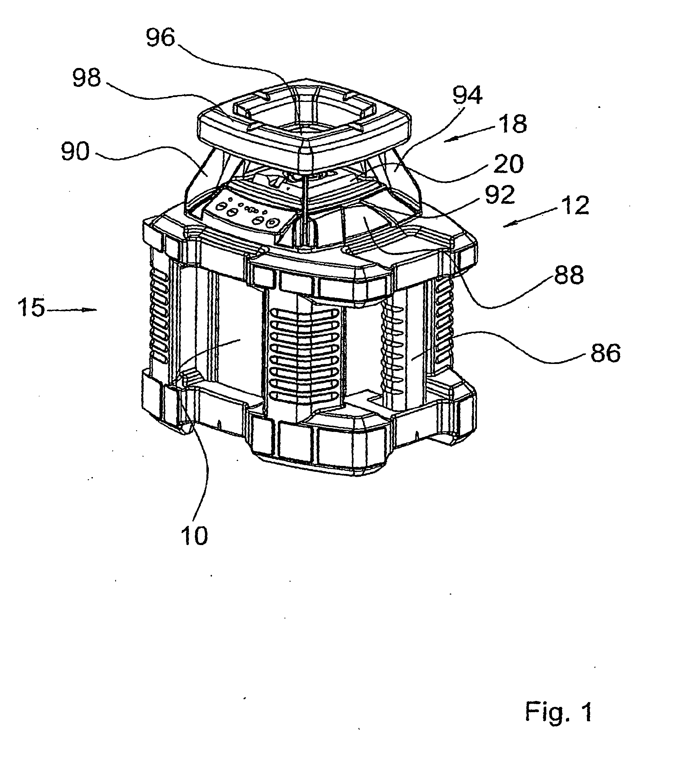

Die erfindungsgemäße Lehre wird in den Fig. 1 bis 7 anhand eines ein Lasergerät 10 umgebenden Schutzgehäuses 12 erläutert, ohne dass hierdurch eine Einschränkung erfolgt. Vielmehr gilt die erfindungsgemäße Lehre für beliebige Schutzgehäuse, die jedoch in bevorzugter Weise Geräte umgeben sollen, die stoßempfindlich sind. Hierzu gehören insbesondere Messgeräte.

Ganz allgemein bezieht sich die Erfindung auf eine Schutzeinrichtung für ein Gehäuse, wobei die Schutzeinrichtung nur abschnittsweise das Gehäuse umgeben muss. So besteht die Möglichkeit, dass die Schutzeinrichtung aus Eckelementen besteht, die an Ecken des Gehäuses abgestützt und untereinander in nachstehend beschriebener Weise verbunden sind.

Im Ausführungsbeispiel der Fig. 1 bis 7 besteht das Schutzgehäuse 12 aus einem aus einem zweiteiligen Basisteil 15 sowie einem Aufsatz 18, der die Laseraustrittsoptik 20 des Lasergerätes 10 umgibt. Der Aufsatz 18 ist jedoch kein zwingendes Merkmal. Auch ist es nicht zwingend erforderlich, dass das Schutzgehäuse 12 aus zwei oder mehr als zwei Teilen besteht. Vielmehr kann das Schutzgehäuse 12 prinzipiell auch einteilig ausgebildet werden.

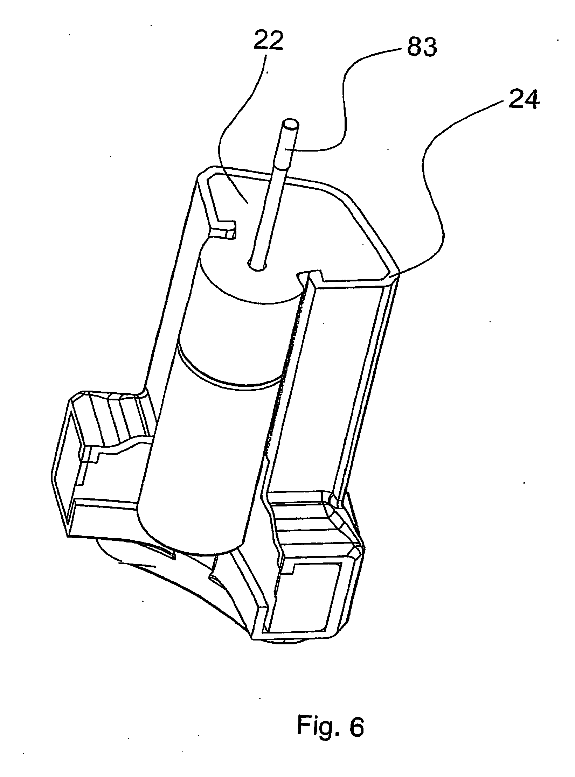

Unabhängig hiervon zeichnet sich das Schutzgehäuse 12 jedoch erfindungsgemäß dadurch aus, dass dieses aus einem Kern 22 und einer Ummantelung 24 besteht, wie der Ausschnitt gemäß Fig. 6 prinzipiell verdeutlicht. Der Ausschnitt gibt dabei einen Abschnitt eines Schenkels des Schutzgehäuses 12 wieder. Die Ummantelung 24 kann dabei quasi als Hülle ausgebildet sein, die den Kern 22 umgibt.

Erfindungsgemäß besteht der Kern 22 aus einem sehr gute stoßabsorbierende Eigenschaften bei sehr gutem Rückstellverhalten aufweisenden Material auf Thermoplastbasis. Dabei ist bevorzugterweise expandiertes Polypropylen (EPP) zu nennen.

Die Ummantelung 24 kann eine aufkaschierte Folie oder ein aufkaschierter Stoff sein. Auch besteht die Möglichkeit, die Ummantelung 24 durch Erwärmen des Kerns 22 auszubilden, wodurch sich eine Haut als die Ummantelung bildet.

Bevorzugterweise besteht die Ummantelung 24 jedoch aus gummielastischem Material wie Kautschuk, wobei EPDM (Ethylen-Propylen-Dien-Kautschuk) hervorzuheben ist. Dabei wird die Ummantelung 24 getrennt vom Kern 22 hergestellt. Sofern die Ummantelung 24 bzw. die Hülle eine hinreichende Stärke aufweist, ist sie eigensteif. Losgelöst hiervon umgibt die Ummantelung 24 den Kern 22 weitgehend formschlüssig, insbesondere umfangsseitig. Ein Fixieren der Ummantelung und damit ein Umspannen des Kerns 22 erfolgt sodann beim Verbinden bzw. Fixieren des Schutzgehäuses auf einem Gerätegehäuse, wie nachstehend erläutert wird.

Die Verwendung der Ummantelung 24 aus EPDM ergibt den Vorteil, dass die Ummantelung 24 der Verformung des Kerns 22 folgt, wobei gleichzeitig sichergestellt ist, dass der Kern 22 gegen Abrieb oder Beschädigungen durch Einwirken von z. B. spitzen Gegenständen geschützt ist.

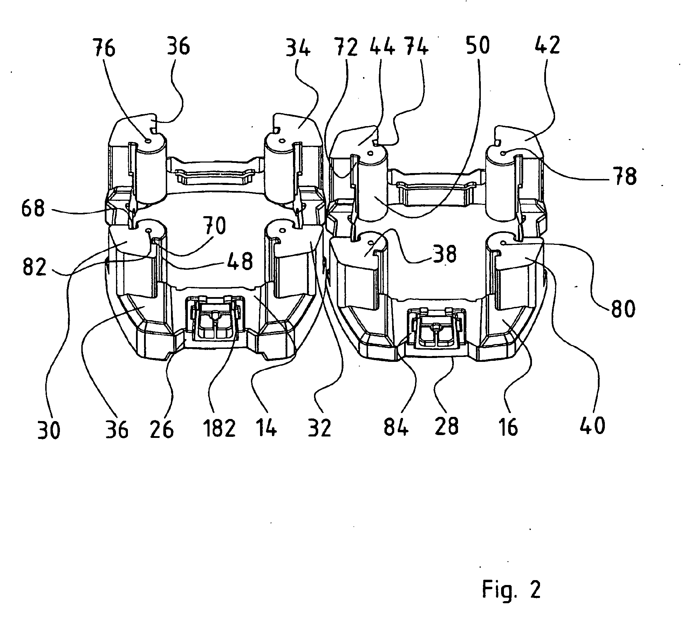

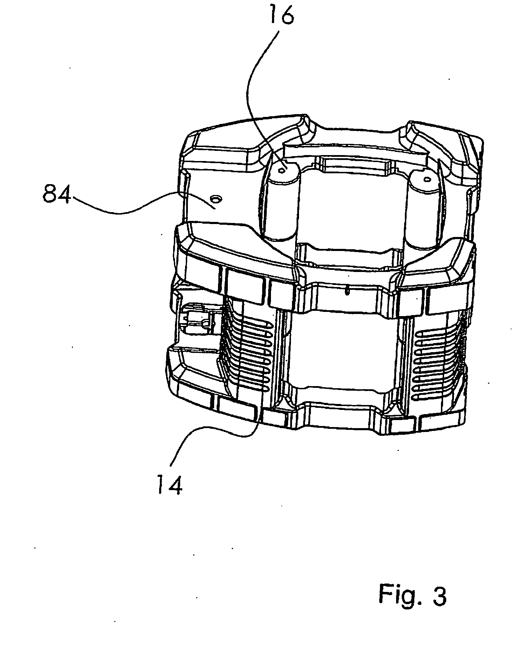

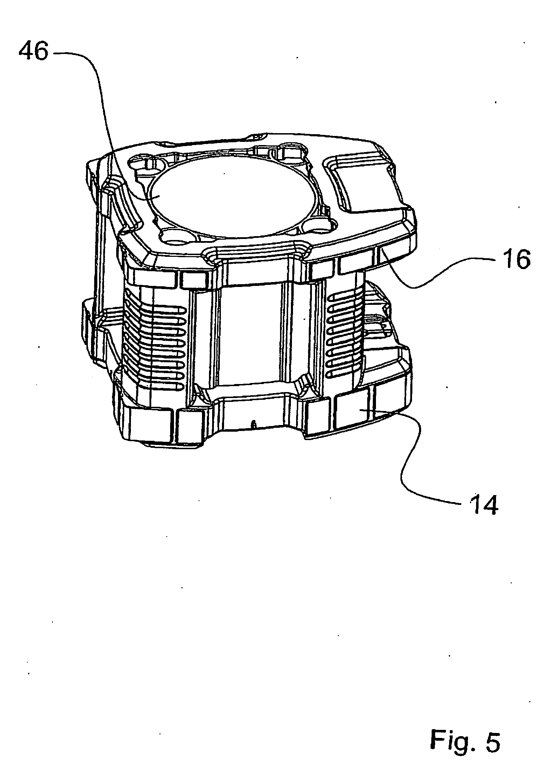

Im Ausführungsbeispiel umfasst das Schutzgehäuse 12 drei Teile, von denen zwei Teile 14, 16, die gleich ausgebildet sein können, den Kern 22 bilden (Fig. 2). Jedes Teil 14, 16 besteht aus einem Rahmen 26, 28 mit von diesen ausgehenden Schenkeln 30, 32, 34, 36 bzw. 38, 40, 42, 44. Wie sich aus der Fig. 3 ergibt, sind die Teile 14, 16, d. h. Abschnitte des Kerns 22 zusammensetzbar, wobei die Schenkel 30, 40, 32, 38, 34, 44, 36, 42, 44 fluchtend ineinander übergehen. Die zusammengesetzten Teile oder Abschnitte 14, 16 bilden folglich ein quaderförmiges Gerüst, das das Gerätegehäuse 46 vollumfanglich umgibt, wie die Fig. 1 und 5 verdeutlichen.

Ein radiales Fixieren der Teile oder Abschnitte 14, 16 an dem Gerätegehäuse 46 erfolgt über die Schenkel 30, 32, 34, 36, 38, 40, 42, 44, und zwar über innenliegende zylindrische Abschnitte dieser, von denen einige beispielhaft mit den Bezugszeichen 48, 50 gekennzeichnet sind. Den zylindrischen Abschnitten 48, 50 sind hohlzylindrische Aufnahmen 52, 54 in dem Gerätegehäuse 46 zugeordnet, die Längsschlitze 56, 58 aufweisen, die von Stegen 60, 62, 64, 66 begrenzt sind. Die Stege 60, 62, 64, 66 greifen sodann in die zylindrischen Abschnitte 48, 50 begrenzende Hinterschnitte 68, 70, 72, 74 ein.

Die den Kern 22 bzw. die Teile oder Abschnitte 14, 16 umgebende hülle bzw. Ummanteilung 24, die mit dem Kern 22 nicht stoffschlüssig verbunden sein muss, kann über die Stege 60, 62, 64, 66 des Gerätegehäuses 46 fixiert sein, die in die Hinterschnitte 68, 70, 72, 74 eingreifen. Mit anderen Worten erfolgt ein Festklemmen der Ummantelung 24 zwischen dem Kern 22 und dem Gerätegehäuse 46. Andere Maßnahmen sind gleichfalls möglich. Auch ist nicht ausgeschlossen, dass zumindest ein punktweises stoffschlüssiges Verbinden zwischen der Ummantelung 24 und dem Kern 22 erfolgt.

Wird das radiale Fixieren der Abschnitte 14, 16 durch die zylindrischen Abschnitte 48, 50 und deren Eingreifen in die hohlzylindrischen Aufnahmen 52, 54 bewerkstelligt, so erfolgt eine axiale Verbindung über in den Stegen oder Schenkeln 30, 32, 34, 36, 38, 40, 42, 44 verlaufende Bohrungen 76, 78, 80, 82. Diese werden z. B. von Stiftschrauben 83 durchsetzt, die in Gewindehülsen einschraubbar sind. Andere axiale Fixierungsmöglichkeiten sind gleichfalls möglich.

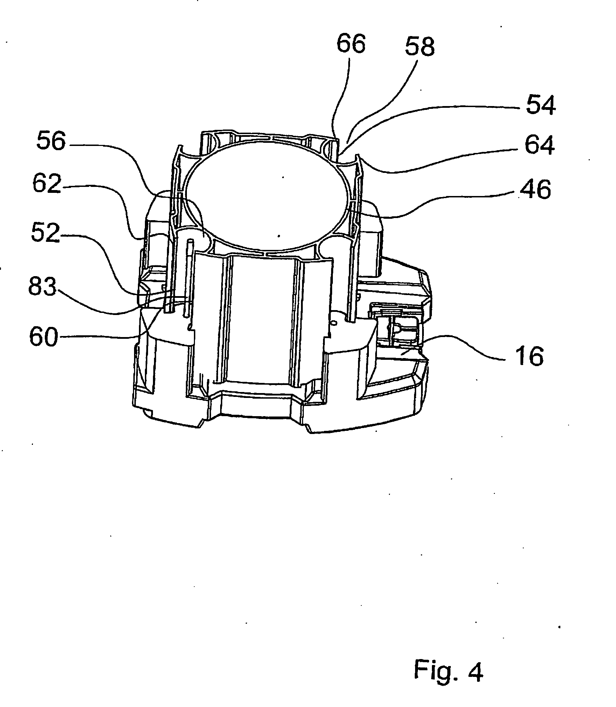

Des Weiteren ergibt sich aus den Darstellungen, dass jeweils ein Schenkel der Rahmen 26, 28 flächiger als die verbleibenden Schenkel ausgebildet ist. Im Ausführungsbeispiel sind dies die Rahmenschenkel 182, 84. Bei zusammengesetztem und das Gerätegehäuse 46 umgebenden Schutzgehäuse (Fig. 1, Fig. 4) ist zwischen den flächigen Schenkeln 182. 84 ein Griff 86 fixiert, so dass ein solcher nicht unmittelbar von dem Lasergerät 10 ausgehen muss, wodurch ein zusätzlicher Stoßschutz gegeben ist.

Um auch die Laseraustrittsoptik 20 zu schützen, ist erfindungsgemäß der Aufsatz 18 vorgesehen, der mit dem kopfseitig verlaufenden Rahmen, also dem Rahmen 28 des oberen Abschnitts 16 vorzugsweise durch Rast- oder Steckverbindungen verbunden ist. Der Aufsatz 18 besteht dabei aus einem aus vorzugsweise glasfaserverstärktem Kunststoff wie Polyamid bestehenden unteren Kranz oder Ring 88, der über Flachstege 90, 92, 94, 96 mit einem oberen Ringelement 98 verbunden ist, der von einer Schutzeinrichtung umgeben ist, die entsprechend der erfindungsgemäßen Lehre aus einem Kern und einer Ummantelung bzw. Hülle besteht.

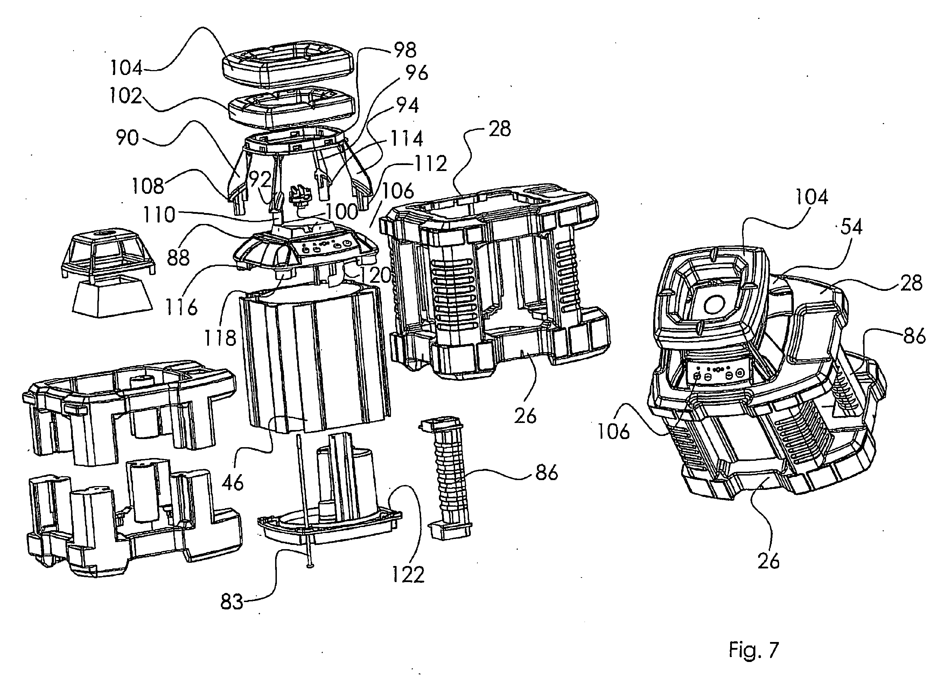

Wie insbesondere aus der Explosionsdarstellung gemäß Fig. 7 zu entnehmen ist, nimmt der untere Kranz oder Ring 88 die Austrittsoptik 100 des Lasergerätes auf. Die Laseroptik 100 kann dabei von einer Halterung aufgenommen bzw. umgeben sein, die ihrerseits von dem unteren Ring bzw. Kranz 88 abschnittsweise umgeben und durch diesen fixiert ist.

Die als Füße zu bezeichnenden Flachstege 90, 92, 94, 96 sind mit dem oberen Ring 98 z. B. durch Steckverbindungen verbunden. Auch kann eine integrale Ausbildung gegeben sein. Der obere Ring 98 ist sodann von einem aus EPDM bestehenden und eine Ringform aufweisenden Kern 102 umgeben, der wiederum von einer die Ummantelung bildenden Hülle 104 umschlossen ist, wie die Darstellungen der Fig. 7 verdeutlichen.

Der untere Ring bzw. Kranz 88 nimmt des Weiteren ein Bedienerfeld 106 auf, über das das Lasergerät bedienbar ist.

Zum Positionieren und Fixieren des unteren Rings 88 greifen Fortsätze 108, 110, 112, 114 der Stege oder Füße 90, 92, 94, 96 in entsprechend angepasste hülsenartige Aufnahmen 116, 118, 120 des Ringes oder Kranzes 88 ein und haben die Funktion von Innengewindehülsen, in die Stiftschrauben einschraubbar sind, die wiederum von einer Bodenplatte 122 ausgehen bzw. in diese einschraubbar sind, die das Lasergehäuse 46 bodenseitig verschließt. Hierzu ragt die Bodenplatte 122 z. B. mit einem umlaufenden Steg abschnittsweise in das Gehäuse 46 hinein und steht über dieses z. B. mit einem flanschartigen Rand in einem Umfang vor, dass die Stiftschrauben in entsprechende Gewinde einschraubbar sind. Die Stiftschrauben durchsetzen des Weiteren die Bohrungen 76, 78, 80, 82 in den Stegen 30, 32, 34, 36, 38, 40, 42, 44, wodurch das Schutzgehäuse 12 axial gesichert wird. Somit ist das Schutzgehäuse 12 im eigentlichen Sinne zwischen dem gehäuseseitig verlaufenden und das Bedienerfeld 106 aufweisenden Ring bzw. Kranz 88 und der Bodenplatte 122 axial fixiert. Der untere Ring 88 wird über die Stiftschrauben zwischen den Füßen oder Stegen 90, 92, 94, 96 und der Bodenplatte 122 gesichert.

Wie sich aus einem Vergleich der Figuren des Weiteren ergibt, umgibt der untere Rahmen 26 des Schutzgehäuses 12 die Bodenplatte 122 in einem Umfang, dass diese stoßgeschützt ist. Der obere Rahmen 28 umgibt den unteren Ring 88 mit dem Bedienerfeld 106 in einem Umfang, dass auch dieser bzw. dieses stoßgeschützt ist. Die Stege oder Füße 90, 92, 94, 96 verlaufen derart versetzt zu der Umfangsfläche des oberen Rahmens 28 und dem den oberen Ring 98 umgebenden Schutz, dass erstere von der von dem oberen Schutzring 102, 104 und dem Schutzgehäuse 12 aufgespannten Umhüllenden nach innen versetzt verläuft.

Ergibt sich nach dem Ausführungsbeispiel der Fig. 1 bis 7, dass das Schutzgehäuse eine offene Quaderform bildet, so besteht erfindungsgemäß auch die Möglichkeit, dass ein zu schützendes Gehäuse derart gesichert wird, dass als Eckelemente ausgebildete Kernelemente aus expandiertem Polypropylen auf Ecken eines Gehäuses angeordnet werden, wobei die Eckelemente untereinander über aus gummielastischem Material bestehendem Streifen- oder Bandmaterial verbunden sind, so dass sich bezüglich Eckelemente und Streifen- bzw. Bandmaterial dem Grunde nach ein Aufbau ergibt, der das erfindungsgemäße Schutzgehäuse auszeichnet. Die Eckelemente üben die stoßabsorbierende Funktion aus, wobei ein Schutz gegen Abrieb und Eindringen von spitzen Gegenständen durch die Ummantelung aus dem gummielastischen Material wie insbesondere EPDM gegeben ist.

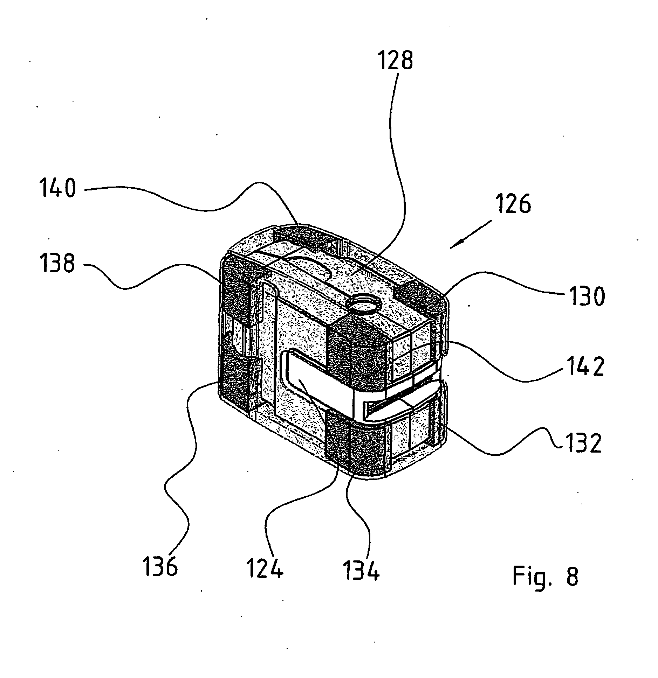

Den Fig. 8 bis 10 sind weitere Ausführungsbeispiele der erfindungsgemäßen Lehre zu entnehmen. So verdeutlicht die Fig. 8, dass ein Messgerätegehäuse 124 von einem Schutzgehäuse 126 umgeben ist, das aus einem Kern aus thermoplastischem Material wie expandiertem Polypropylen (EPP) besteht, der aus Eckelementen 130, 132, 134, 136, 138, 140, 142 zusammengesetzt ist. Dieser wird umgeben und fixiert von einer Ummantelung 128, die entsprechend der erfindungsgemäßen Lehre aus einem gummielastischen Material wie Kautschuk ausgebildet ist. Die Ummantelung 128 ist eine Hülle, die die Eckelemente 130, 132, 134, 136, 138, 140, 142 umgibt, ohne dass jedoch das Messgerätegehäuse 124 in Bereichen abgedeckt ist, die funktionell frei sein müssen.

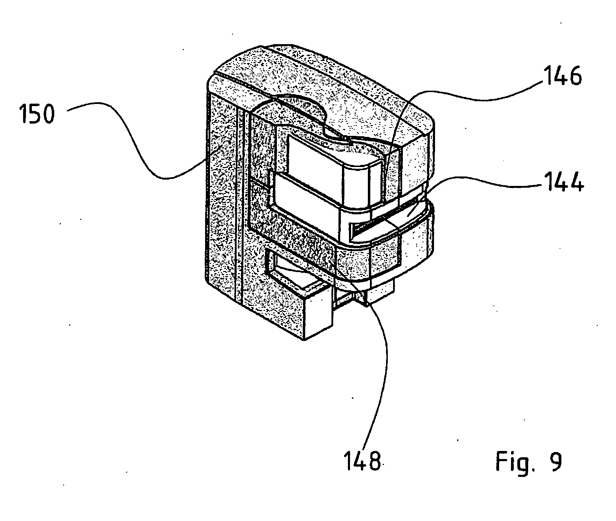

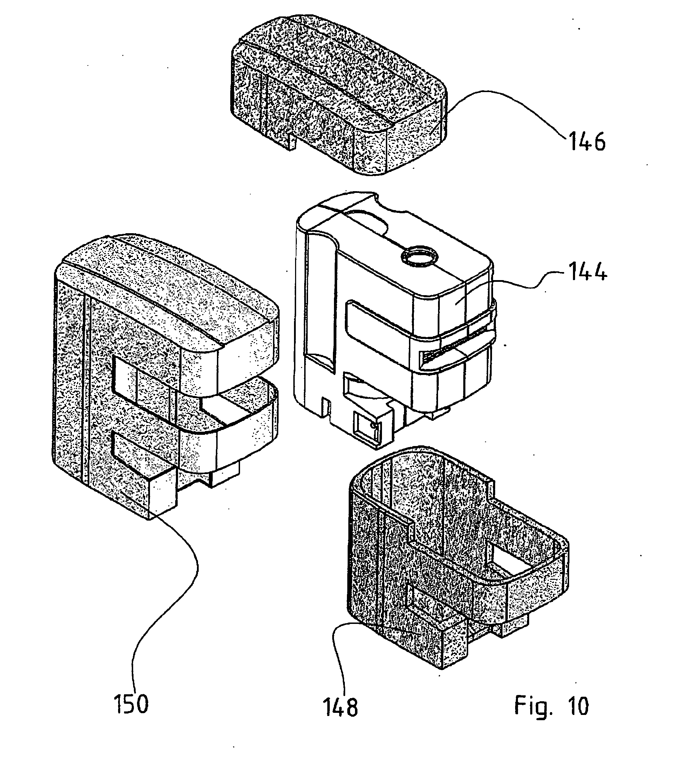

Das den Fig. 9 und 10 zu entnehmende Ausführuiigsbeispiel soll noch einmal verdeutlichen, dass das erfindungsgemäße Schutzgehäuse aus einem als zweiteiligen Kern und einer diesen umgebenden einteilige Ummantelung - auch Umhüllung oder Hülle zu bezeichnen - besteht. So wird ein zu schützendes Messgerätegehäuse 144, bei dem es sich wiederum um ein Lasergehäuse handeln kann, von Abschnitten 146, 148 weitgehend formschlüssig umgeben, die den Kern aus thermoplastischem Material bilden. Nachdem der Kern 146, 148 auf das Messagerätegehäuse 144 aufgesetzt ist, wird eine aus gummielastischem Material wie Kautschuk bestehende Hülle oder Ummantelung 150 quasi über die Abschnitte des kerns 146, 148 gestülpt, so dass zum einen die Abschnitte 146, 148 des kerns in hinreichendem Umfang auf dem Messagerätegehäuse 144 fixiert sind und zum anderen die Abschnitte 146, 148 gegen Abrieb und eindringende spitze Gegenstände geschützt sind. Die Ummantelung 150 besteht aus gummielastischem Material und ist somit dehnbar. Dabei ist die Ummantelung 150 beim Überziehen auf die Abschnitte 146, 148 in einem Umfang dehnbar, dass ein Aufstülpen ermöglicht wird.

### Bezugszeichenliste

- 10: Lasergerät
- 12: Schutzgehäuse
- 14: Teil des Schutzgehäuses
- 15: Basisteil
- 16: Teil des Schutzgehäuses
- 18: Aufsatz
- 20: Laseraustrittsoptik
- 22: Kern
- 24: Ummantelung
- 26: Rahmen
- 28: Rahmen
- 30: Schenkel
- 32: Schenkel
- 34: Schenkel
- 36: Schenkel
- 38: Schenkel
- 40: Schenkel
- 42: Schenkel
- 44: Schenkel
- 46: Gerätegehäuse
- 48: Schenkelabschnitt
- 50: Schenkelabschnitt
- 52: Aufnahme
- 54: Aufnahme
- 56: Längsschlitz
- 58: Längsschlitz
- 60: Steg
- 62: Steg
- 64: Steg
- 66: Steg
- 68: Hinterschnitt
- 70: Hinterschnitt
- 72: Hinterschnitt
- 74: Hinterschnitt
- 76: Bohrung
- 78: Bohrung
- 80: Bohrung
- 82: Bohrung
- 83: Stiftschraube
- 182: Rahmenschenkel
- 84: Rahmenschenkel
- 86: Griff
- 88: Ring
- 90: Flachsteg
- 92: Flachsteg
- 94: Flachsteg
- 96: Flachsteg
- 98: Ring
- 100: Austrittsoptik
- 102: Kern
- 104: Hülle
- 106: Bedienerfeld
- 108: Fortsatz
- 110: Fortsatz
- 112: Fortsatz
- 114: Fortsatz
- 116: Aufnahme
- 118: Aufnahme
- 120: Aufnahme
- 122: Bodenplatte
- 124: Gerätegehäuse
- 126: Schutzgehäuse
- 128: Ummantelung
- 130: Element eines Kerns
- 132: Element eines Kerns
- 134: Element eines Kerns
- 136: Element eines Kerns
- 138: Element eines Kerns
- 140: Element eines Kerns
- 142: Element eines Kerns
- 144: Gerätegehäuse
- 146: Abschnitt eines Kerns
- 148: Abschnitt eines Kerns
- 150: Ummantelung

## Patentansprüche

1. Messgerätegehäuse (46, 124, 144), wie Lasergerätegehäuse, mit einer dieses abschnittsweise umgebenden Schutzeinrichtung,
wobei die Schutzeinrichtung aus einem zumindest abschnittsweise das Messgerätegehäuse umgebenden Kern (22, 130, 132, 134, 136, 138, 140, 142, 146, 148) und einer Ummantelung (24, 128, 150) besteht, **dadurch gekennzeichnet dass** der Kern ein das Messgerätegehause gegen stöße schützender kern aus thermoplastischem Material ist und abschnittsweise formschlüssig von dem Messgerätegehäuse aufgenommen ist und
dass die Ummantelung eine den kern umgebende und den kern gegen Abrieb und Eindringen von spitzen Gegenstanden schützende Unmantelung ist und entweder aus zumindest einem Material aus der Gruppe gummi- H elastisches Material, Kautschuk, thermoplastisches Elastomermaterial, Ethylen-Propylen-Dien-Kautschuk (EPDM) besteht oder eine aus dem Kern durch Wärmebehandlung gebildete Haut oder auf den Kern kaschierte Folie oder auf den kern kaschierter Stoff ist.

2. Messgerätegehäuse nach Anspruch 1,
**dadurch gekennzeichnet,**
**dass** die Schutzeinrichtung an Ecken und/oder Kanten des Messgerätegehäuses (46, 124, 144) sich abstützende und zueinander beabstandet angeordnete Elemente (130, 132, 134, 136, 138, 140, 142, 146, 148) als den Kern umfasst, die über die Umnantelumg 136, 138, 140,142,146,148) als den Kern umfasst, die über die Ummantelung (128) verbunden und/oder von dieser abschnittsweise umgeben sind.

3. Messgerätegehäuse nach Anspruch 1 oder 2,
**dadurch gekennzeichnet**
**dass** die Ummantelung (150) den kern (146, 148) auf dem Messgerätegehäuse (46, 124, 144) fixiert.

4. Messgerätegehäuse nach zumindest einem der vorhergehenden Ansprüche,
**dadurch gekennzeichnet,**
**dass** der Kern (22, 130, 132, 134, 136, 138, 140, 142, 146, 148) aus expandiertem Polypropylen (EPP) besteht.

5. Messgerätegehäuse nach zumindest einem der vorhergehenden Ansprüche,
**dadurch gekennzeichnet,**
**dass** der Kern (22, 146, 148) der Schutzeinrichtung aus zusammensetzbaren Abschnitten (14, 16, 146, 148) besteht und/oder die Ummantelung (24, 128, 150) ein- oder mehrteilig ausgebildet ist.

6. Messgerätegehäuse nach zumindest einem der vorhergehenden Ansprüche,
**dadurch gekennzeichnet,**
**dass** der Kern (22) ein quaderförmiges Gerüst mit Längs- und Querschenkeln (30, 32, 34, 36, 38, 40, 42, 44, 182, 84) ist, wobei insbesondere der Kern (22) von einem vorzugsweise eine Rechteckgeometrie aufweisenden Rahmen (26, 28) ausgehende Schenkel (30, 32, 34, 36, 38, 40, 42) mit zylinderförmigen Abschnitten (48, 50) aufweist, die abschnittsweise formschlüssig von jeweils einen Längsschlitz (56, 58) aufweisenden hohlzylinderförmigen Abschnitten des Messgerätegehäuses (46) aufgenommen sind.

7. Messgerätegehäuse nach zumindest einem der vorhergehenden Ansprüche,
**dadurch gekennzeichnet,**
**dass** die Abschnitte (14, 16) des Kerns (22) über sich in dessen Längsschenkeln (30, 32, 34, 36, 38, 40, 42, 44) erstreckenden Verbindungselementen wie Stiftschrauben verbunden sind.

8. Messgerätegehäuse nach zumindest einem der vorhergehenden Ansprüche,
**dadurch gekennzeichnet,**
**dass** die Ummantelung (24) und der Kern (22) getrennt hergestellte Bauteile sind.

9. Messgerätegehäuse nach zumindest einem der vorhergehenden Ansprüche,
**dadurch gekennzeichnet,**
**dass** die Ummantelung (24) zwischen dem Kern (22) und Abschnitten (60, 62, 64, 66) des Messgerätegehäuses (46) fixiert wie festgeklemmt ist, wobei insbesondere die Ummantelung (24) zwischen Hinterschnitten (68, 70, 72, 74) von Längsschenkeln (30, 32, 34, 36, 38, 40, 42, 44) des Kerns (22) der Schutzeinrichtung und in die Hinterschnitte eingreifenden Abschnitten wie Stegen (60, 62, 64, 66) des Messgerätegehäuses (46) fixiert ist.

10. Messgerätegehäuse nach zumindest einem der vorhergehenden Ansprüche,
**dadurch gekennzeichnet,**
**dass** der Kern einem boden- und kopfseitigen Rahmen (26, 28) mit jeweils einem eine Ebene aufspannenden flächigen Schenkel (82, 84) aufweist, zwischen denen eine Handhabe (86) verläuft, wobei insbesondere die Handhabe zwischen den Rahmen (26, 28) fixiert wie festgeklemmt ist.

11. Messgerätegehäuse nach Anspruch 10,
**dadurch gekennzeichnet,**
**dass** von kopfseitigem Rahmen (28) ein vorzugsweise eine Laserstrahloptik beabstandet umgebender Aufsatz (18) ausgeht, wobei vorzugsweise der Aufsatz (18) mit dem kopfseitigen Rahmen (28) über Rast- oder Steckverbindungen verbunden ist.

12. Messgerätegehäuse nach Anspruch 11
**dadurch gekennzeichnet,**
**dass** der Aufsatz (18) aus einem von dem kopfseitigen Rahmen (28) ausgehenden ersten Ringelement (88) und einem mit diesem über vorzugsweise Flachstege (90, 92, 94, 96) verbundenen zweiten Ringelement (98) besteht, das seinerseits vorzugsweise aus einem aus expandiertem Polypropylen (EPP) bestehendem Kern und einer den Kern umgebenden aus z. B. Kautschuk wie EPDM bestehender Ummantelung besteht, wobei vorzugsweise das erste Ringelement (88) und/oder die Flachstege (90, 92, 94, 96) aus Kunststoff wie faserverstärktem Kunststoff, insbesondere glasfaserverstärktem Polyamid bestehen.

13. Messgerätegehäuse nach Anspruch 12
**dadurch gekennzeichnet,**
**dass** das erste Ringelement (88) Aufnahme für einen Laser bzw. Abschnitt von diesem ist und insbesondere ein Bedienerfeld (106) aufweist.

14. Messgerätegehäuse nach Anspruch 12
**dadurch gekennzeichnet,**
**dass** das erste Ringelement (88) über die Stege wie Flachstege (90, 92, 94, 96) gegenüber dem Messgerätegehäuse (46) gesichert ist, wobei bevorzugterweise die Stege (90, 92, 94, 96) gehäuseseitig hülsenartige Fortsätze (108, 110, 112, 114) mit Innengewinde aufweisen, in die Verbindungselemente wie Stiftschrauben einschraubbar sind, die von einer Bodenplatte (122) des Messgerätegehäuses (46) ausgehen bzw. in diese einschraubbar sind, und wobei vorzugsweise die Verbindungselemente wie Stiftschrauben die Längsschenkel (30, 32, 34, 36, 38, 40, 42, 44) durchsetzen.

15. Messgerätegehäuse nach Anspruch 12
**dadurch gekennzeichnet,**
**dass** die Stege (90, 92, 94, 96) mit dem vorzugsweise aus Kunststoff wie faserverstärktem Kunststoff bestehenden zweiten Ringelement (98) durch insbesondere Steckverbindungen verbunden oder mit diesem integral ausgebildet sind.

16. Messgerätegehäuse nach Anspruch 12
**dadurch gekennzeichnet,**
**dass** das zweite Ringelement (98) von einem aus thermoplastischem Material bestehendem Kern (102) in Form eines Ringelements zumindest abschnittsweise umgeben ist, der seinerseits von einer Ummantelung wie Hülle (104) umschlossen ist.

## Claims

1. Measuring instrument housing (46, 124, 144), such as laser instrument housing, with a protective device enclosing the housing at least in sections, with the protective device consisting of a core (22, 130, 132, 134, 136, 138, 140, 142, 146, 148) surrounding the measuring instrument housing at least in sections and a sheathing (24, 128, 150),
**characterized in**
**that** the core is a core made of thermoplastic material protecting the measuring instrument housing against impacts and is received in a form-fitting manner by the measuring instrument housing and
**that** the sheathing is a sheathing surrounding the core and protecting the core against abrasion and penetration of sharp objects and consisting at least of a material from the group rubber elastic material, natural rubber, thermoplastic elastomer material, Ethylene Propylene Diene Monomer (EPDM), or is a skin formed from the core by heat-treatment or is a foil or fabric laminated onto the core.

2. Measuring instrument housing according to claim 1,
**characterized in,**
**that** as the core the protective device comprises elements (130, 132, 134, 136, 138, 140, 142, 146, 148) supporting at the corners and/or edges of the measuring instrument housing (46, 124, 144) and arranged at a space in relation to each other, and being connected via and/or, at least in sections, are surrounded by the sheathing (128).

3. Measuring instrument housing according to claim 1 or 2,
**characterized in,**
**that** the sheathing (150) fastens the core (146, 148) on the measuring instrument housing (46, 124, 144).

4. Measuring instrument housing according to at least one of the preceding claims,
**characterized in,**
**that** the core (22, 130, 132, 134, 136, 138, 140, 142, 146, 148) consists of expanded Polypropylene (EPP).

5. Measuring instrument housing according to at least one of the preceding claims,
**characterized in,**
**that** the core (22, 146, 148) of the protective device consists of sections (14, 16, 146, 148) designed so as to be assembled and/or that the sheathing (24, 128, 150) is designed in one or several pieces.

6. Measuring instrument housing according to at least one of the preceding claims,
**characterized in,**
**that** the core (22) is a framework in the shape of a rectangular prism with longitudinal and cross arms (30, 32, 34, 36, 38, 40, 42, 44, 84), whereby especially the core (22) comprises arms (30, 32, 34, 36, 38, 40, 42), which originate from a frame (26, 28) having preferably a rectangular geometry and have cylindrical sections (48, 50), which in sections are form-fittingly received by hollow cylindrical sections of the measuring instrument housing (46), each section having one longitudinal slot (56, 58).

7. Measuring instrument housing according to at least one of the preceding claims,
**characterized in,**
**that** the sections (14, 16) of the core (22) are connected through connective elements, such as stud bolts, which extend in the longitudinal legs (30, 32, 34, 36, 38, 40, 42, 44) of the core.

8. Measuring instrument housing according to at least one of the preceding claims,
**characterized in,**
**that** the sheathing (24) and the core (22) are separately produced components.

9. Measuring instrument housing according to at least one of the preceding claims,
**characterized in,**
**that** the sheathing (24) is fastened, such as being clamped, between the core (22) and the sections (60, 62, 64, 66) of the measuring instrument housing (46), whereby especially the sheathing (24) is fastened between undercuts (68, 70, 72, 74) of longitudinal arms (30, 32, 34, 36, 38, 40, 42, 44) of the core (22) of the protective device and sections, such as bars (60, 62, 64, 66), of the instrument housing (46), which engage in the undercuts.

10. Measuring instrument housing according to at least one of the preceding claims,
**characterized in,**
**that** the core has a frame (26, 28) at top and bottom, each with one planar arm (84) defining a plane between which a handle (86) is running, whereby especially the handle is fastened such as clamped between the frames (26, 28).

11. Measuring instrument housing according to claim 10,
**characterized in,**
**that** from the top frame (28) originates an attachment (18), preferably surrounding a laser optic at a distance, whereby preferably the attachment (18) is connected with the top frame (28) through snap-in or plug-in connections.

12. Measuring instrument housing according to claim 11,
**characterized in,**
**that** the attachment (18) consists of a first ring element (88) originating from the top frame (28), and of a second ring element (98), which is connected to the first one preferably through flat bars (90, 92, 94, 96) and preferably consists of a core made of expanded Polypropylene (EPP), and of a sheathing made of natural rubber, such as EPDM, and surrounding the core, whereby preferably the first ring element (88) and/or the flat bars (90, 92, 94, 96) consist of plastic, such as fiber reinforced plastic, particularly glass-fiber reinforced Polyamide.

13. Measuring instrument housing according to claim 12,
**characterized in,**
**that** the first ring element (88) is receptacle for a laser or for sections of it and especially comprises a control panel (106).

14. Measuring instrument housing according to claim 12,
**characterized in,**
**that** the first ring element (88) is secured against the measuring instrument housing (46) by means of the bars, such as the flat bars (90, 92, 94, 96), whereby preferably the bars (90, 92, 94, 96) at the housing side have sleeve-like extensions (108, 110, 112, 114) with internal thread, into which connection elements, such as stud bolts, are screwable, which originate from, respectably are screwable into a bottom plate (122) of the measuring instrument housing (46), and whereby preferably the connection elements, such as stud bolts, penetrate the longitudinal arms (30, 32, 34, 36, 38, 40, 42, 44).

15. Measuring instrument housing according to claim 12,
**characterized in,**
**that** the bars (90, 92, 94, 96) are connected particularly through plug-in connections to the second ring element (98) made of plastic, such as fiber reinforced plastic, or are designed integrally with the same.

16. Measuring instrument housing according to claim 16,
**characterized in,**
**that** the second ring element (98) is at least in sections surrounded by a core (102) in form of a ring element, made of a thermoplastic material and being enclosed by a casing, such as a sleeve (104).

## Revendications

1. Boîtier de mesureur (46, 124, 144) tel qu'un boîtier d'appareil à laser, avec un dispositif protecteur qui l'entoure partiellement, le dispositif protecteur étant constitué d'un coeur (22, 130, 132, 134, 136, 138, 140, 142, 146, 148) qui entoure au moins partiellement le boîtier de mesureur, et d'une enveloppe (24, 128, 150),
**caractérisé en ce**
**que** le coeur est un coeur en matériau thermoplastique protégeant le boîtier de mesureur contre les chocs et est partiellement logé par complémentarité de forme dans le boîtier de mesureur et
**que** l'enveloppe est une enveloppe entourant le coeur et protégeant le coeur contre l'abrasion et la pénétration d'objets pointus et est soit constituée d'au moins un matériau du groupe des gommes élastiques tel que caoutchouc, élastomère thermoplastique, éthylène-propylène-diène monomère (EPDM), soit est une pellicule formée à partir du coeur par traitement thermique, ou un film contrecollé sur le coeur ou une étoffe contrecollée sur le coeur.

2. Boîtier de mesureur selon la revendication 1,
**caractérisé en ce**
**que** sur des angles et/ou des faces du boîtier de mesureur (46, 124, 144), le dispositif protecteur comprend, en tant que coeur, des éléments (130, 132, 134, 136, 138, 140, 142, 146, 148) s'étayant et distants entre eux qui sont reliés par l'intermédiaire de l'enveloppe (128) et/ou sont partiellement entourés par elle.

3. Boîtier de mesureur selon la revendication 1 ou 2,
**caractérisé en ce**
**que** l'enveloppe (150) fixe le coeur (146, 148) sur le boîtier de mesureur (46, 124, 144).

4. Boîtier de mesureur selon au moins une des revendications précédentes,
**caractérisé en ce**
**que** le coeur (22, 130, 132, 134, 136, 138, 140, 142, 146, 148) est constitué de polypropylène expansé (EPP).

5. Boîtier de mesureur selon au moins une des revendications précédentes,
**caractérisé en ce**
**que** le coeur (22, 146, 148) du dispositif protecteur est constitué de parties pouvant être assemblées (14, 16, 146, 148) et/ou que l'enveloppe (24, 128, 150) est formée en une ou plusieurs parties.

6. Boîtier de mesureur selon au moins une des revendications précédentes,
**caractérisé en ce**
**que** le coeur (22) est une ossature parallélépipédique avec des branches longitudinales et transversales (30, 32, 34, 36, 38, 40, 42, 44, 182, 84), sachant qu'en particulier le coeur (22) présente des branches (30, 32, 34, 36, 38, 40, 42) avec des parties cylindriques (48, 50) partant d'un cadre (26, 28) présentant de préférence une géométrie rectangulaire, et qui se logent partiellement par complémentarité de forme dans des parties cylindriques creuses du boîtier de mesureur (46) qui présentent respectivement une échancrure oblongue (56, 58).

7. Boîtier de mesureur selon au moins une des revendications précédentes,
**caractérisé en ce**
**que** les parties (14, 16) du coeur (22) sont reliées par des éléments de jonction, tels que des goujons filetés, s'étendant dans ses branches longitudinales (30, 32, 34, 36, 38, 40, 42, 44).

8. Boîtier de mesureur selon au moins une des revendications précédentes,
**caractérisé en ce**
**que** l'enveloppe (24) et le coeur (22) sont des composants fabriqués séparément.

9. Boîtier de mesureur selon au moins une des revendications précédentes,
**caractérisé en ce**
**que** l'enveloppe (24) est fixée, par exemple bloquée, entre le coeur (22) et des parties (60, 62, 64, 66) du boîtier de mesureur (46), sachant qu'en particulier l'enveloppe (24) est fixée entre des contredépouilles (68, 70, 72, 74) de branches longitudinales (30, 32, 34, 36, 38, 40, 42, 44) du coeur (22) du dispositif protecteur et des parties du boîtier de mesureur (46), telles que des arêtes (60, 62, 64, 66), qui s'engagent dans les contredépouilles.

10. Boîtier de mesureur selon au moins une des revendications précédentes,
**caractérisé en ce**
**que** le coeur présente un cadre inférieur et un cadre supérieur (26, 28) avec respectivement une branche (82, 84) en nappe déterminant un plan, entre lesquelles s'étend une manette (86), la manette étant en particulier fixée, par exemple bloquée, entre les cadres (26, 28).

11. Boîtier de mesureur selon la revendication 10,
**caractérisé en ce**
**que** du cadre supérieur (28) part une pièce rapportée (18) entourant de préférence à distance un instrument optique à rayon laser, sachant que de préférence la pièce rapportée (18) est reliée au cadre supérieur (28) par des raccords à crans ou à emboîtement.

12. Boîtier de mesureur selon la revendication 11,
**caractérisé en ce**
**que** la pièce rapportée (18) est constituée d'un premier élément annulaire (88) partant du cadre supérieur (28) et d'un second élément annulaire (98) relié au premier de préférence par des barrettes plates (90, 92, 94, 96) et qui est pour sa part constitué de préférence d'un coeur constitué de polypropylène expansé (EPP) et d'une enveloppe entourant le coeur et constituée par exemple de caoutchouc tel que de l'EPDM, sachant que de préférence le premier élément annulaire (88) et/ou les barrettes plates (90, 92, 94, 96) sont constituées de matière synthétique renforcée par fibres, en particulier de polyamide renforcé de fibres de verre.

13. Boîtier de mesureur selon la revendication 12,
**caractérisé en ce**
**que** le premier élément annulaire (88) est un logement pour un laser ou une partie de celui-ci, et présente en particulier un panneau de commande (106).

14. Boîtier de mesureur selon la revendication 12,
**caractérisé en ce**
**que** le premier élément annulaire (88) est assuré par rapport au boîtier de mesureur (46) au moyen de barrettes telles que des barrettes plates (90, 92, 94, 96), sachant que de préférence les barrettes (90, 92, 94, 96) présentent du côté du boîtier des prolongements en forme de douille (108, 110, 112, 114) avec taraudages dans lesquels peuvent être vissés des éléments de jonction, tels que des goujons filetés, et qui partent d'une plaque de base (122) du boîtier de mesureur (46) ou peuvent être vissés dans celle-ci, et que de préférence les éléments de jonction tels que des goujons filetés traversent les branches longitudinales (30, 32, 34, 36, 38, 40, 42, 44).

15. Boîtier de mesureur selon la revendication 12,
**caractérisé en ce**
**que** les barrettes (90, 92, 94, 96) sont reliées en particulier par des raccords à emboîtement au second élément annulaire (98) de préférence constitué de matière synthétique telle que de la matière synthétique renforcée de fibres de verre, ou sont intégralement formées avec lui.

16. Boîtier de mesureur selon la revendication 12,
**caractérisé en ce**
**que** le second élément annulaire (98) est entouré au moins partiellement par un coeur (102) sous forme d'élément annulaire constitué d'un matériau thermoplastique, qui est pour sa part entouré d'une enveloppe telle qu'une gaine (104).
